# FASCICULE DE BREVET EUROPEEN

(11) **EP 0 831 735 B1**
(45) Date de publication et mention de la délivrance du brevet: **23.08.2000**
(21) Numéro de dépôt: 96915065.5
(22) Date de dépôt: 19.04.1996
(51) Int. Cl.: A47J 39/00

(54) **DISPOSITIF MOBILE DE CONSERVATION ET DE REMISE EN TEMPERATURE AVEC BARRIERES THERMIQUES MOBILES ET DISTRIBUTION A NIVEAU CONSTANT DE PLATEAUX-REPAS CHAUDS ET FROIDS**
MOBILE VORRICHTUNG ZUM AUFBEWAHREN UND AUFWÄRMEN VON WARMEN, AUF TABLETTEN ANGEORDNETEN, MAHLZEITEN MIT MOBILEN WÄRMESCHUTZWÄNDEN UND VERTEILUNG AUF EINEM GLEICHEN NIVEAU
MOBILE DEVICE FOR PRESERVATION AND REHEATING WITH MOVABLE THERMAL BARRIERS AND CONSTANT LEVEL DISTRIBUTION OF HOT AND COLD MEAL-TRAYS

(30) Priorité: 09.05.1995 FR 9505622
(43) Date de publication de la demande: 01.04.1998
(73) Titulaire: Grandi, René, I-20060 Campione d'Italia (IT)
(72) Inventeur: Grandi, René, I-20060 Campione d'Italia (IT)
(74) Mandataire: Roman, Michel
(86) Numéro de dépôt international: FR9600605
(87) Numéro de publication internationale: WO9635361

(56) Documents cités:
- EP-A- 0 161 178
- FR-A- 2 266 864
- FR-A- 2 386 291
- FR-A- 2 684 281
- US-A- 3 311 434

## Description

Dispositif mobile de conservation et de remise en température avec barrières thermiques mobiles et distribution à niveau constant de plateaux-repas chauds et froids.

Il est destiné à permettre la distribution de plateaux-repas à niveau constant tout en permettant la remise en température et la conservation des mets chauds et froids, disposés sur un même plateau-repas pendant l'attente de la distribution.

Il est connu de nombreux dispositifs, voir FR-A-2 386 291, réfrigérés comportant des plateaux-repas avec une zone froide et une zone chaude ou en attente de remise en température pour leur distribution finale. Ces deux zones nécessitent une barrière thermique laquelle est souvent fixe et inamovible. Le gerbage traditionnel fixe des plateaux, nécessite leur introduction et leur extraction en venant les poser ou les prendre l'un après l'autre sur leur échelle de gerbage. Ceci obligeant le manutentionnaire à une position inconfortable, de se baisser et se lever pour atteindre les plateaux placés inférieurement ou supérieurement ceci étant des manutentions fastidieuses, surtout lorsque l'espace de déplacement et de mouvement est réduit. De plus, il faut ouvrir la porte d'enceinte du dispositif, à chaque retrait de plateau, ce qui entraîne des dispersions importantes des frigories et calories contenues.

Le dispositif objet de l'invention supprime tous ces inconvénients, voir revendication 1. Il permet une distribution aisée du plateau-repas qui arrive toujours à niveau constant, évitant ainsi les manipulations fastidieuses au manutentionnaire, sans qu'il ait besoin de se baisser, car la distribution s'effectue par une petite portelle sur le haut d'un ou des deux côtés de l'enceinte. L'ouverture, ne distribuant qu'un plateau à la fois, est relativement petite et par définition l'air froid étant plus lourd, il descend et reste confiné dans l'enceinte, comme les banques réfrigérées des produits surgelés des grandes surfaces qui ne sont pas fermées sur leur partie supérieure.

Ainsi ce dispositif facilite la distribution des plateaux-repas tout en garantissant au maximum la conservation en zone réfrigérée des mets contenus, en préservant les frigories et la calorie de chacune des deux zones.

L'enceinte mobile, peut soit être équipée d'un kit de réfrigération avec compresseur, évaporateur et régulateur, soit par "Carbo" ou "gaz CO2" ou bien comporter une réserve accumulatrice de fluide réfrigéré avec distribution par tubes caloporteurs ou être raccordée à un module ou borne nourrice distribuant par des gaines de ventilation, les frigories ainsi que les calories nécessaires à la réfrigération et la remise en température des plateaux. Ces derniers peuvent également être chauffés individuellement par une résistance thermique située sous chaque plateau. Une barrière thermique sépare la zone froide de la zone chaude, elle est mobile et articulée, elle comporte des ouvertures latérales, entre lesquelles est introduit chaque plateau, isolant hermétiquement les deux zones chaudes et froides. Des taquets fixés sur la barrière thermique servent à stabiliser et équilibrer les plateaux.

Les ouvertures latérales comportent des joints en caoutchouc souple ou en poils caoutchoutés, ils sont compressés lors de l'introduction et en présence du plateau reprennent leur forme initiale en venant combler le vide de l'ouverture lorsque le plateau est retiré, évitant ainsi à ce que la température des deux zones ne se mélange. Ces joints sont fixés par clips ou par une glissière en "queue d'aronde" pour être amovibles et être nettoyés quotidiennement.

Afin d'assurer le niveau constant de la distribution du plateau-repas, l'ensemble : plateau-repas et barrières thermiques, est entraîné vers le haut, jusqu'à la portelle de distribution, par un système de rotation, fixé sur la barrière thermique ou faisant un tout avec cette dernière.

Ce système, articulé au même niveau que l'ouverture de la barrière thermique, est composé par une chaîne à galets en plastique ou non, entraînée sur les poulies par un pédalier muni d'un cliquet anti-retour et démultiplié pour entraîner par une simple pression du pied, l'ensemble formant la colonne distributrice, pour amener à niveau constant et faire sortir chaque plateau l'un après l'autre.

La chaîne à galets peut également être entraînée par un moto-réducteur pouvant éventuellement actionner les roues du chariot pour le faire avancer, un embrayage permettant de choisir la fonction désirée.

Un ressort compressé situé sur la chaîne libère le plateau au moment de son arrivée devant la portelle de distribution. Le plateau n'étant que partiellement éjecté, cela permet de le saisir. Sous le dernier plateau inférieur la barrière thermique est prolongée par un rideau hermétique, clipsable, amovible et lavable pour toujours séparer les deux zones de chaud et de froid, il comprend également la chaîne à galet pour permettre la rotation de tout l'ensemble.

Ce système à niveau constant qui vient d'être décrit, est une des formes de réalisation du dispositif, qui peut être conçu avec une seule ou double distribution ayant les zones chaudes et froides communes, pour cette dernière forme de réalisation, les plateaux sortent latéralement de chaque côté, offrant un double service à la fois.

Toutefois, une autre forme de réalisation selon la nécessité d'encombrement peut être envisagée, notamment pour des chariots d'aviation où la distribution du plateau ne peut s'effectuer que sur côté face et longitudinalement au dispositif. Ainsi la partie à chauffer du plateau pénétre de face dans l'ouverture de la barrière thermique munie d'un joint ou de poils caoutchoutés, le plateau est muni sur toute sa largeur d'une butée, comportant un électro-aimant qui vient se plaquer contre la barrière thermique aussi aimantée, ceci permettant de stabiliser le plateau.

Cette disposition ne change ni n'empêche l'entraînement, la mobilité et la rotation de la barrière thermique.

Pour un dispositif dans cette forme de réalisation, une zone centrale permet la remise en température des aliments par chaleur pulsée au moyen de résistances ventilées dans une gaine munie de trous dirigeant la ventilation. Cette même zone, en attente de chauffe, est réfrigérée de façon identique à la zone permanente de froid, selon le type de réfrigération adopté, comme cité précédemment ci-dessus.

Quelle que soit la forme de réalisation du dispositif, l'introduction des plateaux s'effectue par une porte de service située du même côté que l'évacuation des plateaux (latérale ou frontale), elle permet aussi le nettoyage manuel et le contrôle intérieur des moyens mis en oeuvre.

L'introduction des plateaux pourrait aussi s'effectuer de façon identique à leur évacuation mais de façon inversée. Lorsque le dispositif est déchargé des plateaux, des buses connectées par un raccord rapide à une pompe pression par projection d'eau ou de vapeur, permettent un nettoyage aisé, rapide et très efficace pour l'élimination des bactéries.

Une partie transparente, sur toute la hauteur du dispositif, permet de visualiser l'intérieur de la colonne distributrice de plateaux.

Sur les dessins annexés, donnés à titre d'exemple non limitatif de forme de réalisation de l'objet de l'invention :

La figure 1 est une coupe de face du dispositif avec double enceinte et double distribution latérale des plateaux.

Les figures 2 et 3 représentent le même dispositif vu de côté mais avec un stade différent du niveau des plateaux.

La figure 4 est une vue montrant le détail d'une forme de chaîne à galets entraînée par la poulie.

La figure 5 montre une vue latérale de la barrière thermique avec son système central mobile d'entraînement.

La figure 6 est une vue de dessus de la barrière thermique séparant les deux zones des plateaux.

La figure 7 présente une perspective de réalisation du dispositif avec un module fixe ou détachable comportant les éléments de réfrigération et de remise en température.

La figure 8 est un schéma montrant la partie supérieure du module avec les conduits de ventilation pour diffuser et recycler les frigories sur les deux zones de l'enceinte.

La figure 9 est une perspective d'une partie interne du dispositif avec sa colonne distributrice comportant les éléments thermiques de remise en température et avec introduction frontale des plateaux.

La figure 10 montre une vue de dessus de l'introduction longitudinale des plateaux.

La figure 11 représente une vue de face et en coupe d'un dispositif dans son ensemble avec double enceinte et double distribution longitudinale des plateaux.

La figure 12 représente schématiquement un moto-réducteur entraînant la chaîne à galets par l'intermédiaire d'un pignon denté.

La figure 13 représente, vu de côté, le dispositif selon l'invention équipé d'un moto-réducteur pouvant entraîner soit la chaîne à galets, soit les roues de l'enceinte mobile, grâce à des galets caoutchoutés.

La figure 14 est un détail montrant le principe d'une chaîne à galets avec maillons s'emboîtant les uns dans les autres.

Et la figure 15 est une vue de face d'une variante du dispositif comportant une carrosserie coulissante pour faciliter le nettoyage.

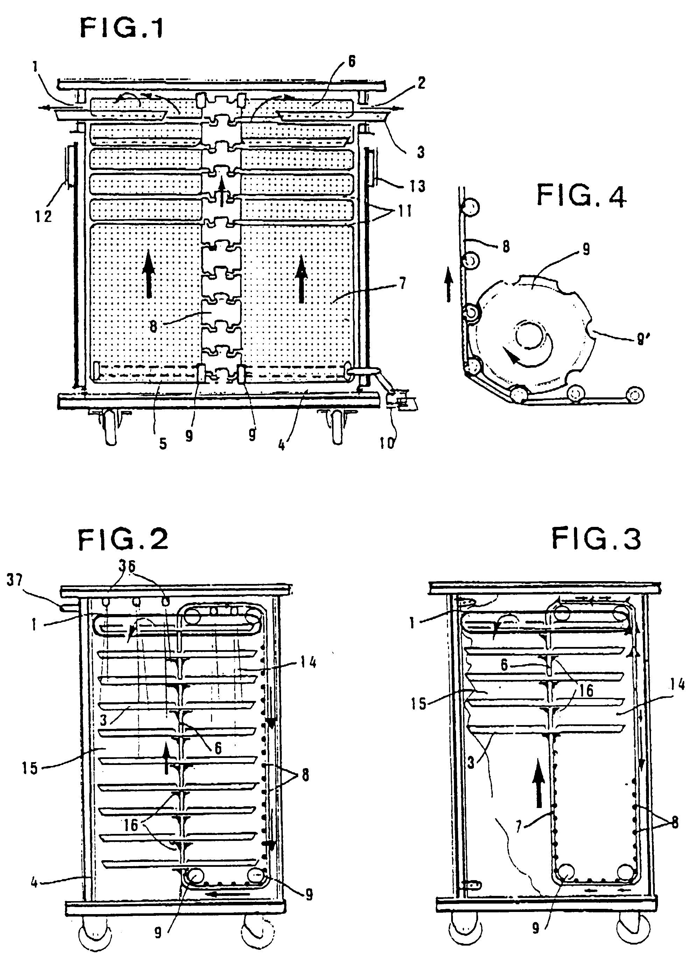

Le dispositif est constitué, fig 1, par la double distribution latérales 1 et 2 des plateaux 3, introduits par les portes 12, 13. La colonne distributrice 5 de l'enceinte 4 comporte la barrière thermique 6 prolongée en fin de rotation par le rideau isolant 7. Au centre la chaîne à galets 8 articulée est entraînée sur les poulies 9 au moyen du pédalier 10. La barrière thermique 6 est articulée pour sa rotation au niveau des ouvertures 11 correspondant à l'articulation de la chaîne 8, elles permettent également l'introduction et le coulissement des plateaux

La barrière thermique 6 des fig 2 et 3, sépare l'enceinte 4 et les plateaux 3 en deux zones, l'une en réfrigération 14 permanente et l'autre 15 en attente réfrigérée pour une remise en température différée. Les taquets 16 stabilisateurs des plateaux sont fixés sur la barrière thermique 6. Sur la fig 2 l'enceinte 4 comprend les plateaux 3, en attente de distribution par l'ouverture 1, la chaîne à galets 8 maintenue par les poulies 9 n'est pas enclenchée pour la rotation. Les buses 36 sont raccordées au raccord rapide 37 pour le nettoyage. Sur la fig 3, la chaîne à galets 8 a entrepris sa rotation pour évacuer les plateaux, le rideau isolant 7 sépare les deux zones 14, 15.

La chaîne à galets 8 de la fig 4 est entraînée par la poulie 9 crantée 9'.

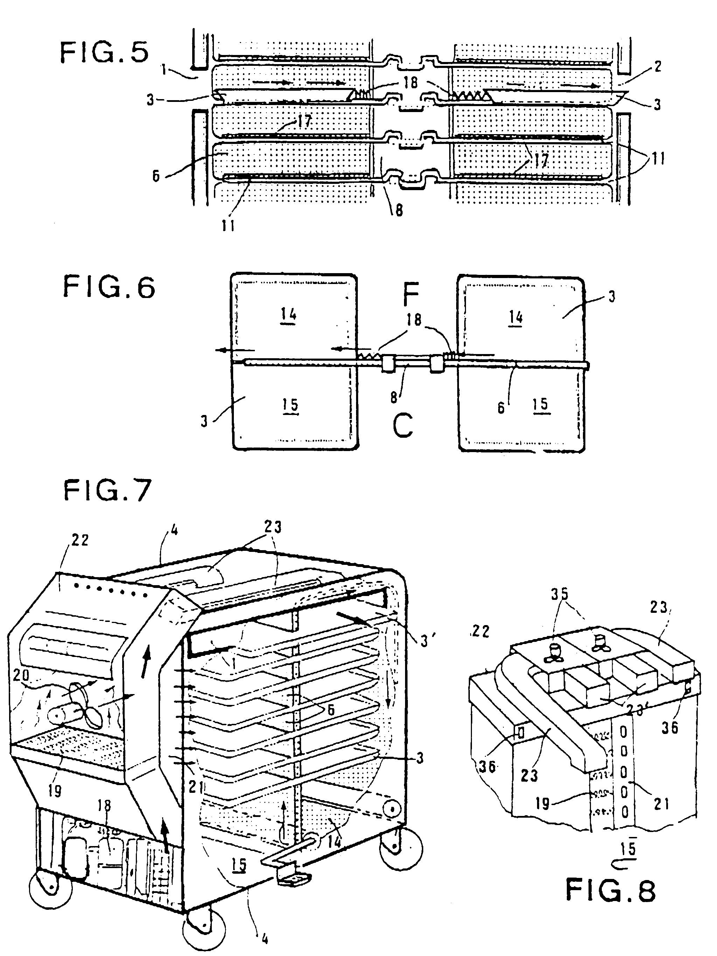

Sur les fig 5 et 6 les plateaux 3 sont introduits entre la barrière thermique 6 jusqu'au niveau de la chaîne à galets 8 et par les ouvertures 11 lesquelles comprennent les joints amovibles 17. Les ressorts 18 permettent l'éjection des plateaux par les ouvertures 1 et 2. La barrière thermique 6 de la fig 6 isole la zone froide 14 (F) de la zone en attente réfrigérée de remise en température 15 (C) des plateaux 3.

Une seule enceinte 4 est présentée sur la fig 7 avec la barrière thermique 6 séparant les deux zones 14 et 15. Le plateau supérieur 3' est sorti par un seul côté et par l'ouverture latérale 1, prêt à être saisi.

Le module 22 contient les éléments réfrigérants, ici par compresseur 18, et les moyens de chauffe par les résistances 19 ventilées 20 au travers d'une gaine 21 jusque dans la zone 15 au moment de la remise en température de cette partie du plateau. Les conduits 23 servent à diriger et à recycler 23' les frigories dans la zone réfrigérée 14 et la zone 15 lorsqu'elle est en attente de remise en température.

Sur la fig 8, les crochets 36 permettent l'assemblage du module 22 à l'enceinte 4 des plateaux pour la transmission des frigories par les conduits 23 ici sur la zone 15 en attente de remise en température, un des conduits 23 est plus long pour atteindre la zone de réfrigération permanente.

Les conduits 23' permettent le recyclage des frigories en les aspirant par les turbines 35, la gaine 21 contient les éléments de chauffe 19 pour la chauffe de la zone 15.

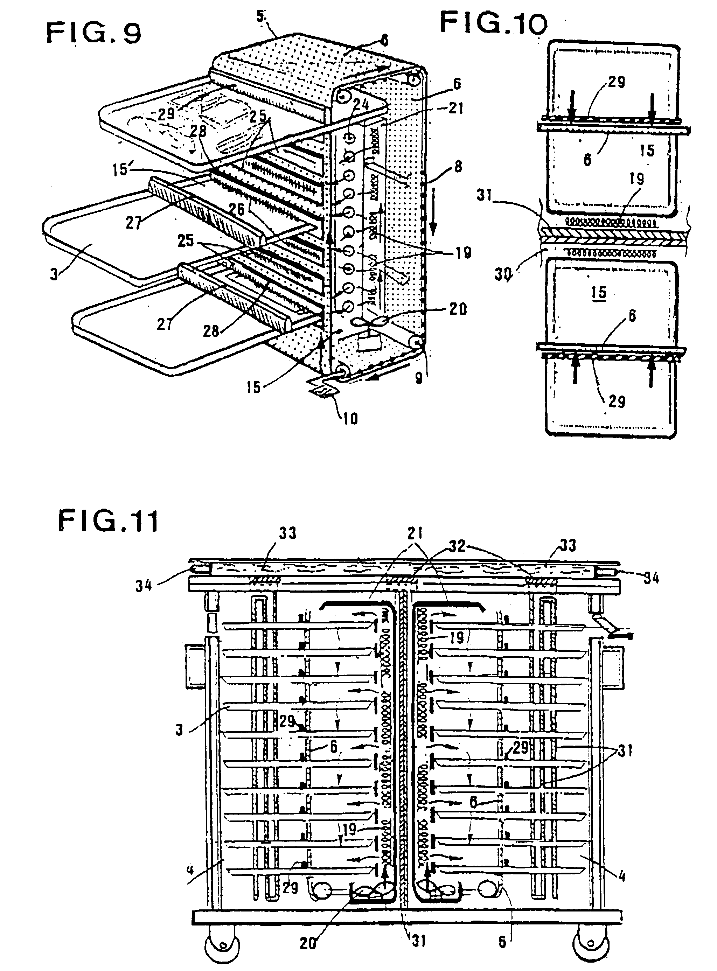

La colonne distributrice 5 de la fig 9, comprend la zone de chauffe 15 avec sa gaine 21 équipée des résistances 19 et de trous 24 pour la diffusion de la ventilation 20. La barrière thermique 6 a des ouvertures 25 avec des joints ou poils 26, entre lesquels est introduite la partie 15' de remise en température du plateau 3. Les électro-aimants 27 et 28 ou système d'accroche sont disposés sur la butée 29 du plateau et sur l'ouverture 25, permettent de maintenir et stabiliser le plateau tout en apportant une parfaite isolation. Le pédalier 10 actionne les poulies 9 entraînant la chaîne 8 pour faire monter d'une rangée les plateaux 3 avec la barrière thermique 6.

Les plateaux 3 de la figure 10 sont introduits longitudinalement et de façon opposée pour une double capacité et une double distribution, la butée 29 est plaquée contre la barrière thermique 6. La partie centrale 30 dispache dans la zone de chauffe 15, la réfrigération ici par tubes caloporteurs ou "caoducs" 31 et la chauffe des résistances 19 au moment de la remise en température.

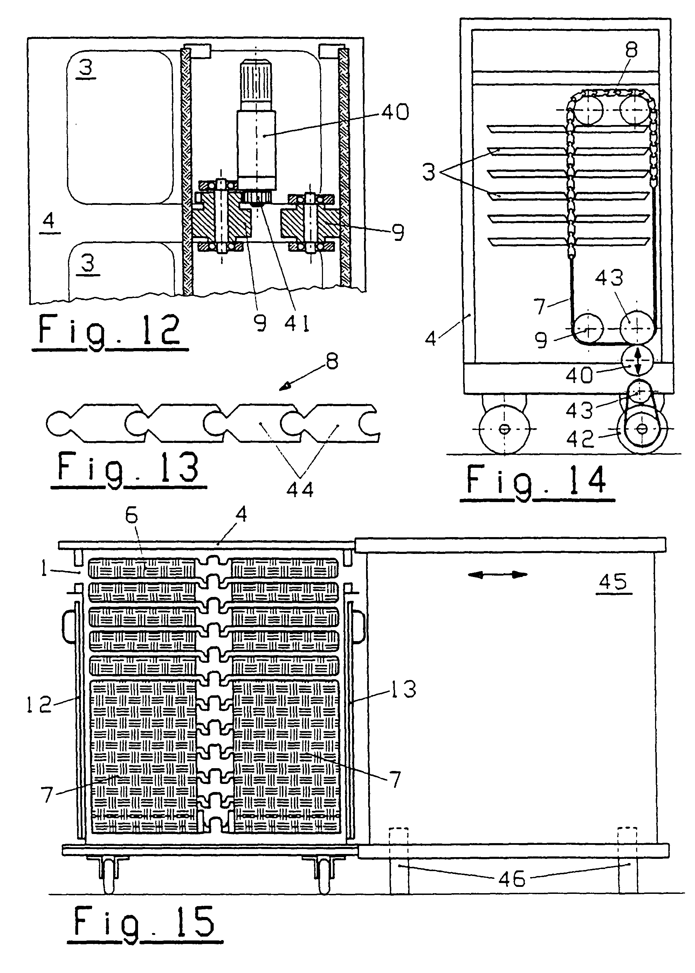

Sur la figure 11, le dispositif comporte deux enceintes 4, 4', dans lesquelles les plateaux 3 sont introduits longitudinalement et viennent buter contre la barrière thermique 6 séparant les zones 14 et 15. Chaque enceinte comprend sa gaine 21 ainsi que les résistances 19 ventilées 20. La réfrigération s'effectue ici au moyen de "caloducs"31 conduisant les frigories captées 32 (carbo ou Co2) dans le module 33 et introduites par le raccord rapide 34.

Si le pédalier 10 n'est pas suffisamment efficace pour actionner la chaîne à galets 8 et faire monter les plateaux 3, on peut avantageusement prévoir l'entraînement de cette chaîne par un moto-réducteur 40 agissant sur l'une des poulies crantées 9, par l'intermédiaire d'un pignon 41 par exemple, comme on peut le voir sur la figure 12.

Sur la figure 13, le moto-réducteur a la double fonction d'entraîner la chaîne à galets 8 afin de faire monter les plateaux ainsi que d'actionner les roues 42 pour faire avancer l'ensemble de l'enceinte mobile. La sélection du mouvement se fera par embrayage manuel de type embrayage à courroie ou par déplacement du moto-réducteur 40 agissant selon sa position sur des galets caoutchoutés 43 ou des pignons entraînant soit la chaîne à galets, soit les roues de l'enceinte mobile.

L'inversion du sens de déplacement de la chaîne à galets 8, et donc de la barrière thermique 6, ainsi que du déplacement de l'enceinte mobile en avant ou en arrière, sera obtenue de préférence par l'inversion des polarités du moto-réducteur 40 alimenté en courant continu, par exemple au moyen d'une batterie et d'un chargeur incorporés

La chaîne à galets 8 pourra avantageusement être constituée de maillons 44 articulés, de préférence en matière plastique, s'emboîtant les un dans les autres, comme le montre la figure 14.

L'enceinte mobile de la figure 15 comporte une carrosserie externe 45 pouvant se déboîter afin de faciliter le nettoyage des éléments internes du dispositif et de permettre le montage et le démontage de la barrière thermique 6 et de la chaîne à galets 8. Dans ce but, la carrosserie est montée sur des glissières permettant de la faire coulisser latéralement et comporte des béquilles rétractables 46 destinées à la maintenir à son niveau normal lorsqu'elle est déboîtée.

Toutefois, les formes, les dimensions, les dispositions ainsi que les moyens mis en oeuvre pour la réalisation du dispositif qui vient d'être décrit, pourront varier dans la limite des équivalents.

## Revendications

1. Dispositif mobile de conservation et de remise en température avec barrières thermiques mobiles et distribution à niveau constant de plateaux-repas chauds et froids,
caractérisé en ce qu'il est composé par une colonne distributrice mobile (5) de plateaux-repas (3) comportant une barrière thermique (6) mobile articulée qui supporte en élevant les plateaux (3) jusqu'à une portelle de distribution (1) tout en séparant la zone froide (14) de la zone chaude (15) en effectuant une rotation au moyen d'une chaîne à galets (8) entraînée par des poulies (9) actionnées par un pédalier (10) ou un moto-réducteur (40).

2. Dispositif selon la revendication 1, caractérisé en ce que la chaîne à galets (8) est solidaire de la barrière thermique (6) et articulée au même niveau que l'ouverture (11) de la barrière thermique (6) pour permettre la rotation de l'ensemble de la colonne de distribution.

3. Dispositif selon la revendication 1,caractérisé en ce que les plateaux (3) sont introduits entre les ouvertures latérales (11) de la barrière thermique (6) et sont stabilisés et équilibrés par des taquets (16) fixés sur ladite barrière thermique, chaque plateau comportant sur toute sa largeur une butée (29) comportant un électro-aimant ou système d'accroche (27) qui vient se plaquer contre l'ouverture (25) également aimantée (28) de la barrière thermique.

4. Dispositif selon les revendications 1 et 2 se caractérisant en ce que sous le dernier plateau (3) inférieur, la barrière thermique (6) est prolongée par un rideau hermétique (7) comportant également la chaîne à galets (8), ce rideau hermétique étant clipsable et amovible pour continuer à séparer la zone froide (14) de la zone chaude (15).

5. Dispositif selon la revendication 1 caractérisé en ce qu'un ressort compressé (18) situé entre la barrière thermique (6) et le plateau (3) permet l'éjection partielle du plateau par la portelle de distribution ou ouverture (1).

6. Dispositif selon toutes les revendications caractérisé en ce qu'il permet une distribution du plateau (3) aussi bien latérale que frontale sans pour cela changer ni empêcher la fonction de la colonne distributrice (5).

7. Dispositif selon l'une quelconque des revendications précédentes, caractérisé en ce qu'il est équipé d'un moto-réducteur (40) ayant la double fonction d'entraîner la chaîne à galets (8) et d'actionner les roues (42) de l'enceinte mobile (4) pour assurer son déplacement, la sélection du mouvement se faisant par embrayage manuel de type embrayage à courroie ou par déplacement dudit moto-réducteur agissant selon sa position sur des galets caoutchoutés (43) ou des pignons (41) entraînant soit la chaîne à galets, soit les roues de l'enceinte mobile.

8. Dispositif selon l'une quelconque des revendications précédentes, caractérisé en ce qu'il comporte une carrosserie externe (45) montée sur des glissières permettant de la faire coulisser latéralement afin de dégager les éléments internes de l'enceinte mobile (4) pour faciliter leur nettoyage et permettre leur démontage et leur montage, ladite carrosserie externe étant équipée de béquilles rétractables (46) destinées à la maintenir à son niveau normal lorsqu'elle est déboîtée.

9. Dispositif selon l'une quelconque des revendications précédentes, caractérisé en ce que la chaîne à galets (8) est constituée de maillons (44) articulés s'emboîtant les un dans les autres.

## Patentansprüche

1. Fahrbare Vorrichtung zur Bewahrung und Wiederherstellung der Temperatur mit mobilen Wärmeschranken und Ausgabe auf konstanter Ebene von warmen und kalten Imbißplatten,
dadurch gekennzeichnet, daß sie zusammengesetzt ist aus einer mobilen Ausgabesäule (5) von Imbißplatten (3), welche eine gelenkig verstellbare Wärmeschranke (6) umfaßt, die in Hebebewegung die Imbißplatten (3) bis zu einer Ausgabeklappe (1) trägt und dabei gleichzeitig den kalten Bereich (14) von dem warmen Bereich (15) trennt durch eine Rundlauf-Förderung mittels einer Blockkette (8), die über Antriebsscheiben (9) durch eine Tretkurbel (10) oder einen Getriebemotor (40) in Bewegung gesetzt wird.

2. Vorrichtung gemäß Anspruch 1, dadurch gekennzeichnet, daß die Blockkette (8) mit der Wärmeschranke (6) verbunden und auf der gleichen Ebene wie die Öffnung (11) der Wärmeschranke (6) beweglich ist, um die Drehbewegung der gesamten Ausgabesäule zu ermöglichen.

3. Vorrichtung gemäß Anspruch 1, dadurch gekennzeichnet, daß die Imbißplatten (3) in die seitlichen Öffnungen (11) der Wärmeschranke (6) eingeführt und durch an der besagten Wärmeschranke befestigte Nasen (16) stabilisiert und in der Waage gehalten werden, wobei jede Imbißplatte über ihre ganze Breite einen Anschlag (29) aufweist, der mit einem Elektromagnet oder einem Koppelsystem (27) versehen ist, welches von der ebenfalls mit einem Magnet (28) versehenen Öffnung (25) der Wärmeschranke angezogen wird.

4. Vorrichtung gemäß den Ansprüchen 1 und 2, dadurch gekennzeichnet, daß unterhalb der untersten Imbißplatte (3) die Wärmeschranke (6) durch eine hermetische Wand (7) verlängert wird, die ebenfalls die Blockkette (8) umfaßt, wobei diese hermetische Wand aufsteckbar und abnehmbar ausgeführt ist, um die Trennung des kalten Bereichs (14) von dem warmen Bereich (15) fortzusetzen.

5. Vorrichtung gemäß Anspruch 1, dadurch gekennzeichnet, daß eine zwischen der Wärmeschranke (6) und der Imbißplatte (3) angeordnete Druckfeder (18) den teilweisen Ausstoß der Imbißplatte durch die Ausgabeklappe bzw. Öffnung (1) erlaubt.

6. Vorrichtung gemäß allen Ansprüchen, dadurch gekennzeichnet, daß sie eine Ausgabe der Imbißplatte (3) sowohl seitlich als auch frontal erlaubt ohne dadurch den Lauf der Ausgabesäule (5) zu ändern oder zu hemmen.

7. Vorrichtung gemäß irgendeinem der vorhergehenden Ansprüche, dadurch gekennzeichnet, daß sie mit einem Getriebemotor (40) ausgerüstet ist, der die zweifache Funktion hat die Blockkette (8) zu bewegen und die Räder (42) des fahrbaren Gehäuses (4) anzutreiben, um dessen Verfahren zu gewährleisten, wobei die Wahl des Antriebs mittels einer manuellen Kupplung des Typs Riemenkupplung oder durch Verschiebung des besagten Getriebemotors erfolgt, der entsprechend seiner Position auf die Gummibereifung (43) oder Ritzel (41) eingreift, welche entweder die Blockkette oder die Räder des fahrbaren Gehäuses bewegen.

8. Vorrichtung gemäß irgendeinem der vorhergehenden Ansprüche, dadurch gekennzeichnet, daß sie eine äußere Karosserie (45) aufweist, montiert auf Schienen, damit diese seitlich gleiten kann, um die Teile innerhalb des Gehäuses (4) freizugeben und damit ihre Reinigung zu erleichtern und ihren Ausbau bzw. Einbau zu ermöglichen, wobei die besagte äußere Karosserie mit einfahrbaren Stützfüßen (46) versehen ist, zu dem Zweck die Karosserie in ihrer normalen Ebene zu halten, wenn sie ausgezogen ist.

9. Vorrichtung gemäß irgendeinem der vorhergehenden Ansprüche, dadurch gekennzeichnet, daß die Blockkette (8) aus sich ineinander einrastenden gelenkigen Gliedern (44) besteht.

## Claims

1. Mobile conserving and heating device with mobile thermal barriers and constant level distribution of hot and cold food trays,
characterized in that it consists of a mobile distributing column (5) of food-trays (3)with an articulated mobile thermal barrier (6) which supports the trays (3) by raising them up to a distribution portal (1) while separating the cold zone (14) from the hot zone (15) and executing a rotational movement using a roller chain (8) driven by pulleys (9) actuated by a pedal device (10) or gearing (40).

2. Device according to claim 1 characterized in that the roller chain (8) is jointed to the thermal barrier (6) and hinged at the same level as the opening (11) of the thermal barrier (6) to allow rotation of the distribution column assembly.

3. Device according to claim 1 characterized in that the trays (3) are inserted between the lateral openings (11) of the thermal barrier (6) and are stabilized and balanced by cleats (16) fixed on the said thermal barrier, each tray having a stop (29) on its full width comprising an electromagnet or fastening system (27) which butts against the opening (25) of the thermal barrier which is also magnetized (28).

4. Device according to claims 1 and 2 characterized in that beneath the last lower tray (3), the thermal barrier (6) is extended by a sealing curtain (7) also with a roller chain (8), this sealing curtain being clipsable and removable so that it continues to separate the cold zone (14) from the hot zone (15).

5. Device according to claim 1 characterized in that a compressed spring (18) situated between the thermal barrier (6) and the tray (3) allows partial ejection of the tray via the distribution portal or opening (1).

6. Device according to any of the claims characterized in that it allows distribution of the tray (3) both laterally and frontly without changing nor preventing operation of the distributing column (5)

7. Device according to any of the aforesaid claims characterized in that it is equipped with a geared motor (40) which has the dual function of driving the roller chain (8) and operating the wheels (42) of the mobile containment (4) in order to ensure its movement, the selection of the movement taking place by a manually operated belt clutch or by movement of the said geared motor according to its position on the rubber rollers (43) or the pinion wheels (41) driving either the roller chain or the wheels of the mobile containment.

8. Device according to any of the aforesaid claims characterized in that it comprises external bodywork (45) fitted on slides to allow lateral sliding in order to release the internal parts of the mobile compartment (4) to facilitate their cleaning and allow dismantling and reassembly, the said external bodywork being equipped with retractable legs (46) which are designed to maintain it at its normal level when uncoupled.

9. Device according to any of the aforesaid claims characterized in that the roller chain (8) consists of articulated links (44) which interlock with one another.
